# FASCICULE DE BREVET EUROPEEN

(11) **EP 3 134 285 B1**
(45) Date de publication et mention de la délivrance du brevet: **17.10.2018**
(21) Numéro de dépôt: 15717036.6
(22) Date de dépôt: 26.03.2015
(51) Int. Cl.: B60K 15/07, F17C 13/08, B60K 15/063

(54) **DISPOSITIF DE SUSPENSION ÉLASTIQUE D'UN ENSEMBLE DE RÉSERVOIRS EN SOUBASSEMENT D'UN VÉHICULE AUTOMOBILE**
VORRICHTUNG ZUR ELASTISCHEN AUFHÄNGUNG EINER ANORDNUNG AN BEHÄLTERN AM UNTERBODEN EINES KRAFTFAHRZEUGS
DEVICE FOR ELASTIC SUSPENSION OF AN ASSEMBLY OF RESERVOIRS ON THE UNDERBODY OF A MOTOR VEHICLE

(30) Priorité: 25.04.2014 FR 1453740
(43) Date de publication de la demande: 01.03.2017
(73) Titulaire: Technoboost, 75116 Paris (FR)
(72) Inventeur: MLINARIC, Arnaud, 95300 Livilliers (FR); GAGLIARDINI, Laurent, 92320 Chatillon (FR); LE DREN, Arnaud, 91800 Brunoy (FR)
(74) Mandataire: Rosenberg, Muriel Sylvie
(86) Numéro de dépôt international: PCT/FR2015/050782
(87) Numéro de publication internationale: WO 2015/162349

(56) Documents cités:
- WO-A1-00/24608
- WO-A2-2006/057765
- DE-A1- 19 528 557
- DE-U1-202006 019 006
- DE-U1-202013 004 145
- JP-A- 2009 255 759
- US-A- 5 370 418

## Description

L'invention concerne un dispositif de suspension élastique d'un ensemble de réservoirs en soubassement d'un véhicule automobile. Elle concerne également un véhicule automobile, dans lequel au moins deux réservoirs sont suspendus en soubassement du véhicule par l'intermédiaire d'un tel dispositif de suspension élastique.

Par «réservoirs», on entend dans la suite du présent texte, de nombreux types de réservoirs ou d'accumulateurs, tels que, par exemple, des réservoirs de carburant, d'hydrogène, de GPL (« gaz de pétrole liquéfié »), de GNV (« gaz naturel pour véhicule »), ou des accumulateurs oléopneumatiques qui permettent de stocker l'énergie grâce à l'usage de liquides ou de gaz sous pression.

De nombreux systèmes de fixation d'un réservoir ou d'un accumulateur, ou d'un ensemble de réservoirs ou d'accumulateurs, en soubassement d'un véhicule automobile sont connus de l'art antérieur. A titre d'exemples, on citera les châssis tubulaires, les colliers avec chapes ou les systèmes de fixation utilisant une technique de surmoulage.

On connaît également, selon le document FR 2 972 682, un système de motorisation hydraulique pour véhicule automobile, comprenant un moteur entraînant une pompe hydraulique pour recharger des accumulateurs de pression, et au moins un moteur hydraulique de traction entraînant des roues motrices du véhicule, qui est commandé par un bloc hydraulique relié à ces accumulateurs de pression. Ce système de motorisation comprend un sous-ensemble comportant un accumulateur haute pression disposé sous le plancher du véhicule, longitudinalement dans l'axe de ce véhicule, et un accumulateur basse pression fixé rigidement à l'extrémité de cet accumulateur haute pression, en étant disposé transversalement par rapport à l'accumulateur haute pression. Les accumulateurs de pression, les blocs hydrauliques HP et les moteurs hydrauliques de traction sont reliés directement entre eux pour former un sous-ensemble rigide comprenant une forme générale en « T ».

On connaît aussi, selon le document WO 2005/088137, un module de service hydraulique dans un système de fluide hydraulique ayant un réservoir de fluide pour stocker une quantité appropriée d'un fluide hydraulique. Ce module de service hydraulique comprend une enveloppe extérieure définissant dans une enceinte une chambre d'air formée dans cette enceinte, cette chambre d'air étant en communication de fluide avec l'air ambiant. Ce module de service hydraulique comprend également au moins un accumulateur de pression de fluide monté à l'intérieur de l'enceinte et un échangeur de chaleur prévu pour le refroidissement du fluide hydraulique, l'échangeur étant disposé à l'intérieur de la chambre d'air.

Les documents DE-U-20 2013 004145 (qui sert de base pour la présentation en deux parties de la revendication 1), DE-U-20 2006 019006, WO-A-2006/057765, WO-A-00/24608, JP-A-2009 255759, US-A-5 370 418 et DE-A-195 28 557 décrivent divers systèmes de fixation de réservoirs.

De manière générale, les systèmes connus de suspension ou fixation de réservoirs ou accumulateurs en soubassement d'un véhicule automobile présentent différents inconvénients, parmi lesquels ceux résultant de leur masse qui n'est pas optimalisée. Pour les accumulateurs oléopneumatiques s'ajoutent les défauts qui résultent d'une trop grande souplesse du système de suspension eu égard aux exigences acoustiques et vibratoires (filtration insuffisante des excitations provenant des pulsations de débit et de pression dans le circuit hydraulique).

Le but de la présente invention est de fournir un dispositif de suspension élastique d'un ensemble de réservoirs en soubassement d'un véhicule automobile, qui permette de surmonter les inconvénients des dispositifs de suspension connus de l'art antérieur et dont certains sont rappelés ci-dessus, par conséquent de fournir un dispositif de suspension élastique d'un ensemble de réservoirs en soubassement d'un véhicule qui soit de masse, de compacité et de comportement vibratoire optimalisés.

Un autre but de la présente invention est de fournir un tel dispositif de suspension élastique d'un ensemble de réservoirs en soubassement d'un véhicule automobile, qui soit de conception, de fabrication et de montage simples, qui soit efficace, robuste, fiable et économique.

Pour parvenir à ces buts, la présente invention a pour objet un dispositif selon la revendication 1.

Selon un mode préféré de réalisation de l'invention, la pluralité de bras est constituée de quatre bras encastrés par deux dans l'un et l'autre des deux flasques, et la pluralité de points de liaison élastique sur la caisse du véhicule est constituée de quatre points de liaison élastique.

Les formes d'extrémité des réservoirs peuvent être des formes sensiblement en ogive, les flasques comportant alors des parties de maintien, sensiblement ogivales, dans lesquelles viennent s'insérer lesdites formes d'extrémité des réservoirs sensiblement en ogive.

Selon un exemple de réalisation non limitatif de l'objet et de la portée de la présente invention, les réservoirs sont au nombre de deux.

De préférence, les bras sont encastrés dans les parties de maintien sensiblement ogivales des flasques.

De préférence également, les tirants peuvent être au nombre de six et constitués par des barres cylindriques filetées aux extrémités pour permette à chaque tirant de relier rigidement les deux flasques.

Avantageusement, une partie en élastomère peut être implantée entre les flasques et les réservoirs, et les points de liaison élastique du dispositif de suspension sur la caisse du véhicule peuvent être des plots élastomères orientés sensiblement verticalement.

Le dispositif de suspension selon la présente invention peut être réalisé dans l'un des matériaux suivants : acier, aluminium, matériau composite, matière plastique.

La présente invention a aussi pour objet un véhicule automobile, qui comporte un ensemble de réservoirs suspendu en soubassement, lequel ensemble de réservoirs est suspendu par l'intermédiaire d'un dispositif de suspension élastique conforme à celui décrit ci-dessus dans ses grandes lignes.

D'autres buts, avantages et caractéristiques de l'invention apparaîtront dans la description qui suit d'un exemple de réalisation, non limitatif de l'objet et de la portée de la présente demande de brevet, accompagnée de dessins dans lesquels :
- la figure 1 est une vue en perspective, schématique, d'un exemple de réalisation du dispositif de suspension élastique d'un ensemble de réservoirs en soubassement d'un véhicule automobile, selon la présente invention, et
- la figure 2 est une vue en perspective, également schématique, du dispositif de suspension de la figure 1 avec deux accumulateurs montés.

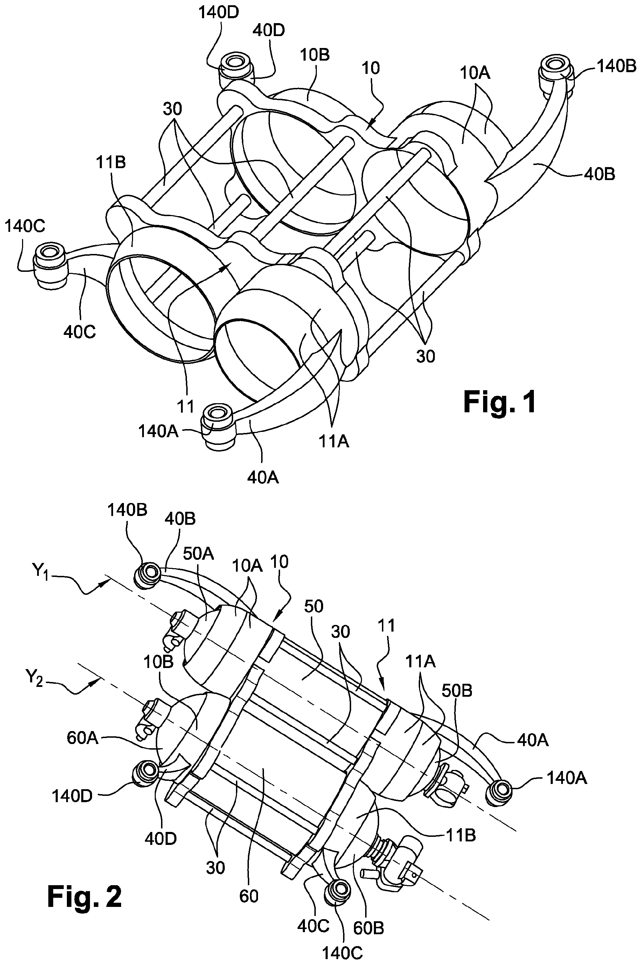

En référence au dessin de la figure 1, on a représenté un exemple de réalisation du dispositif selon l'invention de suspension élastique d'un ensemble de deux réservoirs en soubassement d'un véhicule automobile. Les deux réservoirs, représentés sur le dessin de la figure 2 et désignés par les références 50 et 60, sont de forme générale sensiblement cylindrique terminée par une forme d'extrémité sensiblement ogivale, 50A, 50B, respectivement 60A, 60B, à chacune des deux extrémités. Les axes longitudinaux Y₁ et Y₂ des deux réservoirs 50, respectivement 60, sont sensiblement parallèles.

Le dispositif de suspension selon l'invention est constitué d'une part, de deux flasques, référencés 10 et 11, qui sont reliés entre eux par six tirants désignés collectivement par la référence numérique 30 et destinés à enserrer les réservoirs 50 et 60, et d'autre part, de quatre bras 40A, 40B, 40C et 40D qui relient les flasques 10 et 11 à quatre points de liaison élastique sur l'ossature de la carrosserie du véhicule.

Les formes d'extrémité 50A, 50B, 60A, 60B des réservoirs 50, 60 étant sensiblement en ogive, les flasques 10, 11 comportent, en conséquence, des parties de maintien sensiblement ogivales ou de forme de type « boîte à oeufs », dans lesquelles viennent s'insérer ces formes d'extrémité ogivales. Ainsi le réservoir 50 est maintenu par les parties de maintien 10A et 11A des flasques 10 et 11, respectivement, tandis que le réservoir 60 est maintenu par les parties de maintien 10B et 11B des flasques 10 et 11, respectivement.

Comme illustré sur les figures, les bras 40A, 40B, 40C, 40D, qui permettent d'atteindre les points de liaison sur la carrosserie du véhicule, sont encastrés dans les parties de maintien, respectivement 11A, 10A, 11B, 10B, sensiblement ogivales des flasques 10, 11, de façon à leur donner une raideur d'encastrement importante dans toutes les directions. Les surfaces d'appui sont revêtues d'une mince couche d'élastomère de façon à répartir la contrainte sur la surface de contact.

Les bras de suspension 40A, 40B, 40C, 40D peuvent être, selon le matériau constitutif, soudés sur les flasques 10, 11 ou bien réalisés par moulage avec ces derniers.

Les tirants 30 sont constitués par des barres cylindriques filetées aux extrémités pour permette à chaque tirant 30 de relier rigidement les deux flasques 10 et 11. Les axes longitudinaux des tirants 30 sont sensiblement parallèles à la direction longitudinale des réservoirs, à savoir Y₁ et Y₂.

Une partie en élastomère (non représentée sur les dessins) peut avantageusement être implantée entre les flasques 10, 11 et les réservoirs 50, 60.

On notera que les extrémités des réservoirs peuvent être de forme quelconque, parce que la partie en élastomère mentionnée ci-dessus, placée entre les flasques 10, 11, et les réservoirs 50, 60, peut absorber des formes très différentes.

Les quatre points de liaison élastique 140A, 140B, 140C et 140D du dispositif de suspension sur la caisse du véhicule, qui sont situés aux extrémités des bras 40A, 40B, 40C et 40D, sont des cales élastiques ou plots élastomères orientés sensiblement verticalement. La position et l'orientation verticale de ces plots en élastomère sont imposées par des contraintes de raideur locale et de synthèse véhicule (essais de choc, facilité de montage ou d'assemblage, notamment). Ces contraintes obligent à écarter ces points de liaison des réservoirs suspendus.

Le dispositif de suspension décrit ci-dessus peut être réalisé en acier, ou en aluminium, ou réalisé en un matériau composite, ou bien encore en une matière plastique.

On notera que les bras de suspension 40A, 40B, 40C, 40D présentent une largeur suffisante selon la direction en « Z » du véhicule, de façon à surmonter les problèmes de flexion de l'ensemble châssis et réservoirs dus au fait que les points de liaison élastique sur la caisse du véhicule sont relativement éloignés des réservoirs.

On notera également que les tirants 30, parce que leurs extrémités sont filetées, permettent de contrôler l'effort de serrage des parties de maintien des réservoirs sur les extrémités des réservoirs 50, 60.

Le fonctionnement du dispositif de suspension décrit ci-dessus dans un exemple de réalisation est le suivant :
- on positionne les deux réservoirs 50, 60,
- on met en place les parties de maintien 10A, 10B, 11A, 11B de forme ogivale ou « boîte à oeufs » avec un élastomère intégré,
- on monte l'ensemble sous la caisse du véhicule,

Les efforts transversaux sont repris par « l'insertion totale » des extrémités des réservoirs 50, 60 au niveau des parties de forme ogivale ou « boîte à oeufs » 10A, 10B, 11A, 11B, et les réservoirs eux-mêmes participent à la rigidité.

Il va de soi que le dispositif de suspension décrit ci-dessus est donné à titre d'exemple non limitatif de l'objet et de la portée de la présente invention. Le système de bras de suspension peut être remodelé selon les nouveaux points de liaison et d'accrochage sur l'ossature de la carrosserie du véhicule. En variante également, les tirants filetés 30 peuvent être remplacés par des câbles.

Le dispositif de suspension élastique d'un ensemble de réservoirs en soubassement d'un véhicule automobile qui est décrit ci-dessus dans un exemple de réalisation présente de nombreux avantages, parmi lesquels les avantages suivants :
- il présente une masse rendue optimale,
- il est relativement plus compact que les dispositifs de suspension de réservoirs connus de l'art antérieur, et
- il présente un meilleur comportement vibratoire (raideur spécifique élevée).

## Revendications

1. Dispositif de suspension d'un ensemble de réservoirs (50, 60) en soubassement d'un véhicule automobile, lesdits réservoirs (50, 60) pouvant être montés sensiblement en parallèle et pouvant présenter une forme générale sensiblement de cylindre terminé longitudinalement par deux formes d'extrémité, ledit dispositif de suspension comportant, d'une part, deux flasques (10, 11), qui peuvent épouser lesdites formes d'extrémité des réservoirs (50, 60) et sont reliés entre eux par des tirants (30) pouvant enserrer lesdits réservoirs (50, 60), **caractérisé en ce que** le dispositif de suspension est élastique et qu'il comporte d'autre part une pluralité de bras (40A, 40B, 40C, 40D) qui relient les flasques (10, 11) à une pluralité de points de liaison élastique pouvant être sur la caisse du véhicule.

2. Dispositif de suspension selon la revendication 1, **caractérisé en ce que** ladite pluralité de bras est constituée de quatre bras (40A, 40B, 40C, 40D) encastrés par deux dans l'un et l'autre des deux flasques (10, 11), et **en ce que** ladite pluralité de points de liaison élastique pouvant être sur la caisse du véhicule est constituée de quatre points de liaison élastique.

3. Dispositif de suspension selon l'une quelconque des revendications 1 et 2, **caractérisé en ce que** lesdites formes d'extrémité (50A, 50B, 60A, 60B) des réservoirs (50, 60) peuvent être des formes sensiblement en ogive, les flasques (10, 11) comportant par conséquent des parties de maintien (10A, 10B, 11A, 11B), sensiblement ogivales, dans lesquelles peuvent venir s'insérer lesdites formes d'extrémité (50A, 50B ; 60A, 60B) des réservoirs (50, 60) sensiblement en ogive.

4. Dispositif de suspension selon l'une quelconque des revendications 1 à 3, **caractérisé en ce que** les réservoirs (50, 60) sont au nombre de deux.

5. Dispositif de suspension selon la revendication 3, **caractérisé en ce que** les bras (40A, 40B, 40C, 40D) sont encastrés dans les parties de maintien (10A, 10B, 11A, 11B) sensiblement ogivales des flasques (10, 11).

6. Dispositif de suspension selon l'une quelconque des revendications 4 et 5, **caractérisé en ce que** les tirants (30) sont au nombre de six et constitués par des barres cylindriques filetées aux extrémités pour permette à chaque tirant (30) de relier rigidement les deux flasques (10, 11).

7. Dispositif de suspension selon l'une quelconque des revendications 1 à 6, **caractérisé en ce qu'**une partie en élastomère est implantée entre les flasques (10, 11) et les réservoirs (50, 60).

8. Dispositif de suspension selon l'une quelconque des revendications 1 à 7, **caractérisé en ce que** les points de liaison élastique du dispositif de suspension pouvant être sur la caisse du véhicule sont des plots élastomères (140A, 140B, 140C, 140D) orientés sensiblement verticalement.

9. Dispositif de suspension selon l'une quelconque des revendications 1 à 8, **caractérisé en ce qu'**il est réalisé dans l'un des matériaux suivants : acier, aluminium, matériau composite, matière plastique.

10. Véhicule automobile, qui comporte un ensemble de réservoirs (50, 60) suspendu en soubassement dudit véhicule, **caractérisé en ce que** ledit ensemble de réservoirs (50, 60) est suspendu par l'intermédiaire d'un dispositif de suspension élastique conforme à l'une quelconque des revendications précédentes.

## Patentansprüche

1. Vorrichtung zur Aufhängung einer Anordnung von Behältern (50, 60) am Unterboden eines Kraftfahrzeugs, wobei die Behälter (50, 60) im Wesentlichen parallel montiert werden können und eine im Wesentlichen allgemeine Zylinderform aufweisen können, die längs durch zwei Endformen endet, wobei die Aufhängungsvorrichtung einerseits zwei Flansche (10, 11) umfasst, die sich an die Endformen der Behälter (50, 60) legen können und miteinander durch Zugstäbe (30) verbunden sind, die die Behälter (50, 60) einspannen können, **dadurch gekennzeichnet, dass** die Aufhängungsvorrichtung elastisch ist und dass sie andererseits eine Mehrzahl von Armen (40A, 40B, 40C, 40D) umfasst, die die Flansche (10, 11) mit einer Mehrzahl elastischer Verbindungspunkte verbinden, die sich auf der Karosserie des Fahrzeugs befinden können.

2. Aufhängungsvorrichtung nach Anspruch 1, **dadurch gekennzeichnet, dass** die Mehrzahl von Armen aus vier Armen (40A, 40B, 40C, 40D) besteht, die zu je zwei in dem einen und dem anderen der zwei Flansche (10, 11) verschachtelt sind, und dass die Mehrzahl elastischer Verbindungspunkte, die sich auf der Karosserie des Fahrzeugs befinden kann, aus vier elastischen Verbindungspunkten besteht.

3. Aufhängungsvorrichtung nach einem der Ansprüche 1 und 2, **dadurch gekennzeichnet, dass** die Endformen (50A, 50B, 50C, 50D) der Behälter (50, 60) im Wesentlichen Spitzbogenformen sein können, wobei die Flansche (10, 11) folglich Halteteile (10A, 10B, 11A, 11B), die im Wesentlichen Spitzbogenform haben, umfassen, in welche sich die Endformen (50A, 50B, 50C, 50D) der Behälter (50, 60) im Wesentlichen in Spitzbogenform einfügen können.

4. Aufhängungsvorrichtung nach einem der Ansprüche 1 bis 3, **dadurch gekennzeichnet, dass** es zwei Behälter (50, 60) gibt.

5. Aufhängungsvorrichtung nach Anspruch 3, **dadurch gekennzeichnet, dass** die Arme (40A, 40B, 40C, 40D) in den Halteteilen (10A, 10B, 10C, 10D), die im Wesentlichen spitzbogenförmig sind, der Flansche (10, 11) verschachtelt sind.

6. Aufhängungsvorrichtung nach einem der Ansprüche 4 und 5, **dadurch gekennzeichnet, dass** es sechs Zugstäbe (30) gibt, die aus zylindrischen Stangen bestehen, deren Enden ein Außengewinde aufweisen, um es jedem Zugstab (30) zu erlauben, die zwei Flansche (10, 11) starr zu verbinden.

7. Aufhängungsvorrichtung nach einem der Ansprüche 1 bis 6, **dadurch gekennzeichnet, dass** ein Teil aus Elastomer zwischen den Flanschen (10, 11) und den Behältern (50, 60) implantiert ist.

8. Aufhängungsvorrichtung nach einem der Ansprüche 1 bis 7, **dadurch gekennzeichnet, dass** die elastischen Verbindungspunkte der Aufhängungsvorrichtung, die auf der Karosserie des Fahrzeugs liegen können, Elastomerklötze (140A, 140B, 140C, 140D) sind, die im Wesentlichen vertikal ausgerichtet sind.

9. Aufhängungsvorrichtung nach einem der Ansprüche 1 bis 8, **dadurch gekennzeichnet, dass** sie aus einem der folgenden Werkstoffe hergestellt ist: Stahl, Aluminium, Verbundwerkstoff, Kunststoff.

10. Kraftfahrzeug, das eine Anordnung von Behältern (50, 60) umfasst, die im Unterbau des Fahrzeugs aufgehängt sind, **dadurch gekennzeichnet, dass** die Anordnung von Behältern (50, 60) über eine elastische Aufhängungsvorrichtung nach einem der vorhergehenden Ansprüche aufgehängt ist.

## Claims

1. A device for suspension of an assembly of reservoirs (50, 60) on the underbody of a motor vehicle, said reservoirs (50, 60) being able to be mounted substantially in parallel and being able to have a substantially cylindrical general shape terminated longitudinally by two shaped end pieces, said suspension device comprising, on the one hand, two flanges (10, 11), which can fit closely the said shaped end pieces of the reservoirs (50, 60) and are linked together by tie rods (30) being able to surround said reservoirs (50, 60), **characterized in that** the suspension device is elastic and that it comprises, on the other hand, a plurality of arms (40A, 40B, 40C, 40D) which link the flanges (10, 11) to a plurality of elastic connection points being able to be on the body of the vehicle.

2. The suspension device according to Claim 1, **characterized in that** said plurality of arms is constituted by four arms (40A, 40B, 40C, 40D) fitted in pairs into one and the other of the two flanges (10, 11), and **in that** said plurality of elastic connection points being able to be on the body of the vehicle is constituted by four elastic connection points.

3. The suspension device according to any one of Claims 1 and 2, **characterized in that** said shaped end pieces (50A, 50B, 60A, 60B) of the reservoirs (50, 60) can be substantially ogival shaped pieces, the flanges (10, 11) consequently comprising holding portions (10A, 10B, 11A, 11B) which are substantially ogival-shaped, in which said shaped end pieces (50A, 50B; 60A, 60B) of the reservoirs (50, 60) substantially in an ogival shaped manner can come to be inserted.

4. The suspension device according to any one of Claims 1 to 3, **characterized in that** the reservoirs (50, 60) are two in number.

5. The suspension device according to Claim 3, **characterized in that** the arms (40A, 40B, 40C, 40D) are fitted in the substantially ogival holding parts (10A, 10B, 11A, 11B) of the flanges (10, 11).

6. The suspension device according to any one of Claims 4 and 5, **characterized in that** the tie rods (30) are six in number and are constituted by cylindrical bars threaded at the ends thereof to permit each tie rod (30) to rigidly connect the two flanges (10, 11).

7. The suspension device according to any one of Claims 1 to 6, **characterized in that** an elastomer part is installed between the flanges (10, 11) and the reservoirs (50, 60).

8. The suspension device according to any one of Claims 1 to 7, **characterized in that** the elastic connection points of the suspension device being able to be on the body of the vehicle are elastomer pads (140A, 140B, 140C, 140D) oriented substantially vertically.

9. The suspension device according to any one of Claims 1 to 8, **characterized in that** it is made from one of the following materials: steel, aluminium, composite material, plastic material.

10. A motor vehicle which comprises an assembly of reservoirs (50, 60) suspended on the underbody of said vehicle, **characterized in that** said assembly of reservoirs (50, 60) is suspended by means of an elastic suspension device according to any one of the preceding claims.
